# EUROPÄISCHE PATENTANMELDUNG

(11) **EP 3 398 766 A1**
(43) Veröffentlichungstag der Anmeldung: **07.11.2018**
(21) Anmeldenummer: 17169354.2
(22) Anmeldetag: 03.05.2017
(51) Int. Cl.: B32B 5/02, B32B 7/12, B32B 29/00, B32B 29/02, B65D 85/804

(54) **DECKELFOLIE ZUM VERSCHLIESSEN VON BECHERARTIGEN BEHÄLTNISSEN**

(71) Anmelder: jura-plast GmbH, 91244 Reichenschwand (DE)
(72) Erfinder: MÜLLER, Herbert Jürgen, 91230 Happurg/Förrenbach (DE)
(74) Vertreter: Simandi, Claus

(57) **Zusammenfassung**

Die vorliegende Erfindung betrifft eine biologisch abbaubare Deckelfolie für becherartige Behältnisse, insbesondere für eine Getränkekapsel aus einem biologisch abbaubaren Kunststoff, wobei die biologisch abbaubare Deckelfolie in dieser Reihenfolge eine Schicht aus Papier und mindestens eine Schicht aus einem Vlies, das aus einem biologisch abbaubaren Material hergestellt ist, aufweist.

## Beschreibung

Die vorliegende Erfindung betrifft einer Deckelfolie zum Verschließen von becherartigen Behältnissen wie z. B. Schalen, schüsselartigen Behältnissen oder insbesondere Kapseln, wobei die Deckelfolie aus einem biologisch abbaubaren Material hergestellt ist.

Weit verbreitet sind Kapseln zum portionsweisen Aufbrühen von Getränken wie Kaffee oder Tee. Die Kapseln bestehen aus einem becherartigen Grundkörper und einer Deckelfolie, die den Grundkörper fest verschließt. Die Kapseln sind dafür ausgebildet, mit der Deckelfolie nach unten in einen entsprechenden Zubereitungsautomaten eingelegt zu werden. Für die Zubereitung wird die Kapsel mit Deckelfolie gegen eine strukturierte, z. B. pyramidenförmige Platte gedrückt und von oben von einer Einstichnadel durchstochen. In dem Automaten zubereitetes, heißes Wasser wird mit hohen Druck von oben in die Kapsel gepresst, wobei die Deckelfolie gegen die strukturierte Platte gedrückt wird und sobald der Druck hoch genug ist, aufplatzt. Das heiße Getränk, z. B. gebrühte Kaffee, kann nun durch den Riss in der Deckelfolie und die Löcher der strukturierten Platte ausfließen.

Herkömmlicherweise bestehen die Kapseln, Grundkörper wie Deckelfolie, aus Aluminium um den Inhalt vor Aromaverlusten, z. B. aufgrund von Sauerstoffeintritt, zu schützen. Da Kapseln aus Aluminium nicht kompostierbar sind, fällt eine enorme Menge an Abfall an, der in Regel im Restmüll entsorgt wird. Damit geht der hohe Energieaufwand, der für die Produktion der Aluminiumkapseln erforderlich ist, verloren.

Ein weiterer Nachteil von Kapseln mit Deckelfolie aus Aluminium ist, dass beim Aufplatzen der Deckelfolie während des Brühvorgangs winzige Aluminiumsplitter entstehen können, die in das gebrühte Getränk eingetragen werden.

Mittlerweile sind auch Kapseln bekannt, die einen Grundkörper aus einem biologisch abbaubaren Kunststoff oder dergleichen Material haben. Jedoch verwenden auch diese Kapseln in der Regel als Deckelfolie Aluminium. Die nicht kompostierbare Aluminium-Deckelfolie landet somit wiederum im Restmüll mit den vorstehend genannten Problemen.

Weiter haben auch diese Kapseln den Nachteil, dass beim Aufplatzen der Deckfolie aus Aluminium während des Brühvorgangs winzige Aluminiumsplitter in das gebrühte Getränk eingetragen werden können.

Es war daher Aufgabe der vorliegenden Erfindung eine Deckelfolie aus einem biologisch abbaubaren Material bereitzustellen, die zum Verschließen von Behältnissen mit becherartigen Grundkörper wie z. B. Schalen, Kapseln oder schüsselartigen Behältnissen geeignet ist, und die vorgehend genannten Probleme nicht aufweist.

Erfindungsgemäß wird eine Deckelfolie vorgesehen, die aus zwei oder mehreren Schichten aufgebaut, mit einer Schicht aus Papier und mindestens einer Schicht aus einem Vlies aus einem biologisch abbaubaren Material.

Weiter betrifft die vorliegende Erfindung becherartige Behältnisse, insbesondere für Lebensmittel, wie z. B. Schalen, schüsselartige Behältnisse und insbesondere Getränkekapseln, die aus biologisch abbaubaren Material hergestellt sind, mit der erfindungsgemäßen Deckelfolie.

Die erfindungsgemäße Deckelfolie ist ein Laminat aus zwei oder mehreren Schichten, mit einer Schicht aus Papier und mindestens einer Schicht aus einem Vlies aus einem biologisch abbaubaren Material.

Das biologisch abbaubare Material für das Vlies kann ein biologisch abbaubarer Kunststoff, aber auch ein nachwachsender Rohstoff oder eine Mischung daraus sein. Beispiele für biologisch abbaubare Kunststoffe sind Biopolymere, wie Polymilchsäure (PLA), modifizierte Polymilchsäure, Polymilchsäure-Copolymere, Materialien auf Getreidebasis, wie Maisstärke, Weizenstärke, Kartoffelstärke, auf Basis von pflanzlichen Materialien wie Zuckerrohr (Bagasse), Palmblatt, Schilffasern, Bambus und dergleichen, Materialien auf Holzbasis, wie z. B. Cellulose, Papier, etc.

Beispiele für PLA-Copolymere sind Copolymere mit Polyestern, z. B. aliphatischen Polyestern (CPLA). Weitere Beispiele sind Kombinationen aus PLA-Fasern mit Papier sowie Naturfasern mit Schlichte.
Bevorzugt sind Polylactid und biologisch abbaubare Kunststoffe auf Polylactidbasis, wie modifiziertes Polylactid, Polylactid-Copolymere, Alpha-Hydroxysäuren wie z. B. Poly-(Lactid-co-Glykolid) (PLGA), Polyanhydride, aliphatische Polyester, Copolyester mit aliphatischen und aromatischen Blöcken, Polyesteramid, Polyesterurethan, ein Polyethylenoxidpolymer, ein Polyglycol und Copolymere davon.

Die Schicht aus Papier bildet die nach Außen weisende Schicht der erfindungsgemäßen Deckelfolie. Zum Schutz des Inhalts des Behältnisses ist sie vorzugsweise mit Barriereeigenschaften für Sauerstoff und Wasserdampf ausgerüstet. Hierfür können die Oberseite und/oder die Unterseite der Papierschicht mit einer Barriereschicht versehen sein. Beispielsweise kann die nach Außen weisende Oberseite der Papierschicht mit einer Barriereschicht versehen sein. Prinzipiell kann hierfür jede bekannte Barriereschicht mit geeigneter Sperrwirkung für Sauerstoff und Wasserdampf eingesetzt werden. Beispiele für geeignete Barriereschichten sind Schichten aus Barriere-Kunststoffen wie z. B. Ethylenvinylalkohole (EVOH), Polyethylen niederer Dichte (PE-LD) oder eine biaxial orientierte Polypropylen-Folie (BOPP). Eine Sauerstoffbarrierefunktion der Papierschicht kann z. B. auch durch Hochdruckverpressen der Papierfasern erreicht werden. Diese kann dann bei Bedarf durch Aufbringen einer Wasserdampfbarriereschicht vor Aufquellen geschützt werden und behält dadurch ihre Sauerstoffbarrierefunktion.

Für die Herstellung der Deckelfolie wird das Papier mithilfe eines Kaschierklebers gegen ein oder mehrere Lagen Vlies laminiert.

Es wird ein biologisch abbaubarer Kaschierkleber eingesetzt, der lebensmittelverträglich ist. Beispiele sind wässrige Lösungen von Polyvinylalkohol (PVOH), auf Basis von Stärke, Eiweißkleber, etc.

Abgesehen von Wasser können auch andere geeignete Lösungsmittel wie z. B. Ethanol oder Mischungen davon eingesetzt werden.

Ein weiter geeigneter biologisch abbaubarer Klebstoff ist der wasserbasierte Klebstoff Epotal® Eco der Firma BASF.

Die Schichten werden zusammen mit dem Kaschierkleber laminiert und verklebt.

Generell kann die erfindungsgemäße Deckelfolie nicht nur zum Verschließen von biologisch abbaubaren Behältnissen eingesetzt werden, sondern auch für Behältnisse aus nicht oder nur begrenzt biologisch abbaubaren Materialien.

Aus Umweltgründen und zur Müllvermeidung wird sie jedoch bevorzugt in Verbindung mit biologisch abbaubaren Behältnissen eingesetzt, so dass beides, Grundkörper und Deckelfolie, durch biologischen Abbau entsorgt werden können.

Zum Verschließen des Behältnisses wird die Deckelfolie mit der Vliesschicht nach unten auf die Öffnung des Behältnisses aufgelegt und auf an sich bekannte Art und Weise versiegelt.

Auch die Art des becherartigen Behältnisses ist nicht begrenzt.

Als besonders vorteilhaft hat sich jedoch die erfindungsgemäße Deckelfolie als Deckelfolie für Getränkekapseln, wie Kaffeekapseln erwiesen. Anders als die herkömmlichen Deckelfolien aus Aluminium reißt sie während des Brühvorgangs auf, ohne dass sich störende Splitter bilden. Ein weiterer Vorteil ist, dass die Vliesschicht wie ein Filter wirkt, der nicht gelöste Feststoffteilchen zurückhält.

Vorteilhafterweise kann die erfindungsgemäße Deckelfolie für die bekannten Getränkekapseln aus biologisch abbaubaren Kunststoffen eingesetzt werden. In diesem Fall ist die gesamte Getränkekapsel biologisch abbaubar und kann z. B. kompostiert werden.

Beispiele sind biologisch abbaubare Getränkekapseln wie sie in WO 2015/121489 A1 der Ritter GmbH oder in DE 20 2016 104 950 U1 von Francesco Spignesi beschrieben sind.

Kapseln für Getränke aus biologisch abbaubaren Kunststoff können mittels der in der Kunststofftechnik üblichen Verfahren hergestellt werden, wie z. B. durch Tiefziehen oder im Spritzgussverfahren.
Zum Versiegeln wird die Deckelfolie mit der Vliesschicht auf die Öffnung der Kapsel aufgelegt. Die Versiegelung kann mittels Druck erfolgen, wobei die Vliesschicht als Siegelschicht dient, alternativ oder zusätzlich kann der Rand der Kapsel selbst mit einem Siegelmedium versehen sein. Weiter kann die Versiegelung mittels eines Klebers erfolgen, insbesondere eines biologisch abbaubaren Klebers. Derartige Versiegelungsverfahren sind an sich bekannt und einem Fachmann geläufig.

Nachstehend wird die vorliegende Erfindung anhand eines speziellen Ausführungsbeispiels näher erläutert.

Die Deckelfolie weist eine Papierschicht auf, die mit einem biologisch abbaubaren Kaschierkleber mit einer oder mehreren Schichten aus einem Vlies aus einem biologisch abbaubaren Material verbunden ist. Als biologisch abbaubarer Kaschierklebstoff kann ein Kleber auf Stärkebasis eingesetzt werden.
Die mindestens eine Vliesschicht ist aus Polylactid oder einem Polylactid-Copolymer oder einer Mischung daraus gebildet.
Die Papierschicht weist Barrierefunktionen gegen Sauerstoff und Wasserdampf auf.
Hierzu kann die freie Oberfläche der Papierschicht mit einem Barriere-Kunststoff mit entsprechender Barrierefunktion gegen Sauerstoff und Wasserdampf beschichtet sein.
Gemäß einer weiteren Ausführungsform kann das Papier durch Hochdruckverpressen der Papierfasern eine Sauerstoffbarriere ausbilden. Die freie Oberfläche der Papierschicht kann dann mit einer Wasserdampfbarriereschicht geschützt werden.

Die vorstehend erhaltene Deckelfolie wird mit der Vliesschicht nach unten auf die Öffnung einer Getränkekapsel aus einem biologisch abbaubaren Kunststoff aufgesetzt und Deckelfolie und Kapsel miteinander versiegelt.

In die Getränkekapsel ist vor dem Versiegeln z. B. Kaffeepulver eingefüllt worden.
Die so erhaltene mit Deckelfolie versehene Getränkekapsel ist vollständig biologisch abbaubar und kann nach dem Brühvorgang auf einfache Art und Weise, z. B. durch Kompostierung, entsorgt werden.

## Patentansprüche

1. Biologisch abbaubare Deckelfolie für becherartige Behältnisse,
**wobei** die biologisch abbaubare Deckelfolie in dieser Reihenfolge eine Schicht aus Papier und mindestens eine Schicht aus einem Vlies, das aus einem biologisch abbaubaren Material hergestellt ist, aufweist,
**wobei** die Deckelfolie mit einer Barrierefunktion für Sauerstoff und Wasserdampf ausgerüstet ist.

2. Biologisch abbaubare Deckelfolie nach Anspruch 1,
**wobei** das biologisch abbaubare Material ein biologisch abbaubarer Kunststoff ist.

3. Biologisch abbaubare Deckelfolie nach Anspruch 1 oder 2,
**wobei** das biologisch abbaubare Material Polylactid oder ein biologisch abbaubares Material auf Polylactidbasis ist.

4. Biologisch abbaubare Deckelfolie nach einem der vorhergehenden Ansprüche,
**wobei** das biologisch abbaubare Material ein Polylactid-Copolymer ist.

5. Biologisch abbaubare Deckelfolie nach einem der vorhergehenden Ansprüche,
**wobei** die freie Oberseite und/oder Unterseite der Schicht aus Papier eine Barriereschicht für Sauerstoff und Wasserdampf aufweist.

6. Biologisch abbaubare Deckelfolie nach einem der Ansprüche 1 bis 4, **wobei** die Schicht aus Papier Sauerstoffbarrierefunktion aufweist.

7. Biologisch abbaubare Deckelfolie nach einem der Anspruch 6,
**wobei** die Schicht aus Papier mit einer Barriereschicht für Wasserdampf versehen ist.

8. Biologisch abbaubare Deckelfolie nach einem der vorhergehenden Ansprüche,
**wobei** der biologisch abbaubare Kaschierkleber ausgewählt ist unter einem Kleber auf Basis von Polyvinylalkohol, Stärke oder einem Eiweißkleber.

9. Biologisch abbaubare Deckelfolie nach einem der vorhergehenden Ansprüche,
**wobei** das becherartige Behältnis eine Kapsel, Schale oder schüsselartiges Behältnis aus einem biologisch abbaubaren Kunststoff ist.

10. Biologisch abbaubare Deckelfolie nach einem der vorhergehenden Ansprüche,
**wobei** das becherartige Behältnis eine Getränkekapsel ist.

11. Biologisch abbaubare Deckelfolie nach einem der Ansprüche 1 bis 10,
**wobei** die biologisch abbaubare Deckelfolie in dieser Reihenfolge eine Schicht aus Papier und mindestens eine Schicht aus einem Vlies, das aus einem biologisch abbaubaren Material hergestellt ist, aufweist,
**wobei** die Deckelfolie mit einer Barrierefunktion für Sauerstoff und Wasserdampf ausgerüstet ist.

12. Getränkekapsel aus einem biologisch abbaubaren Material mit einer Deckelfolie nach einem der Ansprüche 1 bis 11.
